# EUROPÄISCHE PATENTSCHRIFT

(11) **EP 1 775 503 B1**
(45) Veröffentlichungstag und Bekanntmachung des Hinweises auf die Patenterteilung: **08.07.2009**
(21) Anmeldenummer: 05022089.6
(22) Anmeldetag: 11.10.2005
(51) Int. Cl.: F16K 1/226

(54) **Dichtungseinrichtung für ein Ventilgehäuse**
Sealing arrangement for a valve housing
Garniture d'étanchéité pour un corps de vanne

(43) Veröffentlichungstag der Anmeldung: 18.04.2007
(73) Patentinhaber: Georg Fischer Rohrleitungssysteme AG, 8201 Schaffhausen (CH)
(72) Erfinder: Jäckle, Timo, 78250 Tengen (DE); Gansner, Anton, 7214 Seewis-Schmitten (CH); Mayer, Karl-Heinz, 78224 Singen (DE)
(74) Vertreter: Weiss, Wolfgang

(56) Entgegenhaltungen:
- US-A- 3 799 501
- US-B1- 6 206 376
- US-B1- 6 494 466

## Beschreibung

Die Erfindung bezieht sich auf eine Dichtungseinrichtung aufweisend einen Dichtungsring sowie ein Ventilgehäuse mit einer im Wesentlichen ringförmigen Nut, wobei das Ventilgehäuse zumindest im Nutbereich einstückig und ungeteilt ausgebildet ist, wobei der Dichtungsring ein Profil mit Zacken und die Nut ein weiteres Profil mit weiteren Zacken aufweist, wobei die Zacken der Nut bzw. die Zacken des Dichtungsringes - in radialer Richtung betrachtet - jeweils versetzt angeordnet ausgebildet sind.

Im Rohrleitungsbau werden Absperrklappen eingesetzt um Rohrleitungen, die flüssige oder gasförmige Medien transportieren ab zu schliessen. Bei der Verwendung einer Absperrklappe sind verschiedene Dichtungsaufgaben gegeben. Die Absperrklappe muss mit dem Gehäuse mediumsdicht in die Rohrleitung eingebaut werden. Die Spindel, die zur Betätigung der Absperrklappe aus dem Ventilgehäuse herausgeführt wird, muss gegen das Gehäuse abgedichtet werden. Weiterhin muss die Klappe oder der Ventilkörper gegenüber dem Ventilsitz auch unter dem vollen Mediumsdruck die Rohrleitung abdichten. Die überwiegende Mehrheit der im Handel erhältlichen Absperrklappen weisen zumindest im Dichtungsbereich zwischen Absperrglied und Ventilgehäuse mehrere Gehäuseteile auf, die mit einander verschraubt oder verpresst werden. Die Mehrteiligkeit verteuert die Herstellung der Absperrklappe erheblich.

Aus der US 6494466 ist eine gattungsgemässe Ventildichtung bekannt. Eine ringförmige Dichtung mit einem gezackten Profil wird in eine Nut mit einem weiteren gezackten Profil eingepresst und mittels Klebstoff festgehalten. Die Zacken der Dichtung sind nicht flächendeckend mit den Zacken der Nut.

Aus der US 6206376 ist eine weitere Ventildichtung bekannt. Die Dichtung besteht aus zwei ringförmigen Teilen, die durch einen Spalt getrennt sind und in die Nut des Ventilgehäuses mit Zacken festgehalten wird. Die zwei ringförmigen Teile werden nach einander in die Nut eingebracht.

Aus der US 3799501 ist ebenfalls eine ringförmige Dichtung mit Zacken bekannt. Die Dichtung weist ein Profil auf, das kongruent ist mit dem Profil der Nut. Durch die Zacken in den Randbereichen des Dichtungsringes und durch die kongruenten Zacken der Nut wird die Dichtung in die Nut verankert. Die Dichtung ist aus einem weichen Elastomer ausgebildet und dichtet vor allem dank der Nachgiebigkeit des Elastomermaterials im Bereich der Mittellinie der Dichtung.

Ausgehend von diesem Stand der Technik ist es Aufgabe der Erfindung, einen Dichtungsring für Absperrklappen mit einem ungeteilten Gehäuse anzugeben, die möglichst leicht, ohne Klebstoff und ohne Schlaufenbildung montiert werden kann.

Diese Aufgabe wird gelöst durch eine Dichtungseinrichtung aufweisend einen Dichtungsring sowie ein Ventilgehäuse mit einer im Wesentlichen ringförmigen Nut, wobei das Ventilgehäuse zumindest im Nutbereich einstückig und ungeteilt ausgebildet ist, wobei der Dichtungsring ein Profil mit Zacken und die Nut ein weiteres Profil mit weiteren Zacken aufweist, wobei die Zacken der Nut bzw. die Zacken des Dichtungsringes - in radialer Richtung betrachtet - jeweils versetzt angeordnet ausgebildet sind, und wobei der Dichtungsring im Bereich radial innerhalb seines ersten Zackens eine geringere Breite aufweist als die Breite der Nut in diesem Bereich, derart, dass zwischen der Wand der Nut und dem Dichtungsring ein Spalt frei bleibt.

Bevorzugte Weiterbildungen der Erfindung ergeben sich aus den abhängigen Ansprüchen.

Es ist von Vorteil, dass der Dichtungsring auch bei einer Beanspruchung in beiden Richtungen der Absperrklappe eine möglichst gute Dichtwirkung hat. Dies wird dadurch erreicht, dass die Nut in einem Innenring des Ventilgehäuses senkrecht zur Strömungsrichtung angeordnet ist. Dies wird auch dadurch erreicht, dass der Dichtungsring im Bereich vor dem ersten Zacken des Dichtungsringes eine geringere Breite als die Breite der Nut in dem Bereich vor dem ersten Zacken der Nut aufweist.

Es ist auch von Vorteil, dass der Dichtungsring möglichst einfach vormontiert werden kann. Dies wird dadurch erreicht, dass der Dichtungsring im Bereich vor dem zweiten Zacken einen zusätzlichen Sporn aufweist. Dies wird auch dadurch erreicht, dass der Sporn am Dichtungsring gegenüber dem ersten Zacken liegend ausgebildet ist, derart, dass der Dichtungsring im Bereich des Spornes die grösste Dicke aufweist.

Ein Ausführungsbeispiel der Erfindung wird anhand der Figuren beschrieben. Es zeigen:
Figur 1 einen Schnitt durch ein Ventilgehäuse mit einer erfindungsgemässen Dichtungseinrichtung,
Figur 2 einen Schnitt durch einen Bereich des Ventilgehäuses von Figur 1,
Figur 3 einen Schnitt durch den Bereich des Ventilgehäuses von Figur 2 mit dem Dichtungsring nach der Vormontage und
Figur 4 einen Schnitt durch den Bereich des Ventilgehäuses von Figur 2 mit dem Dichtungsring nach der Endmontage.

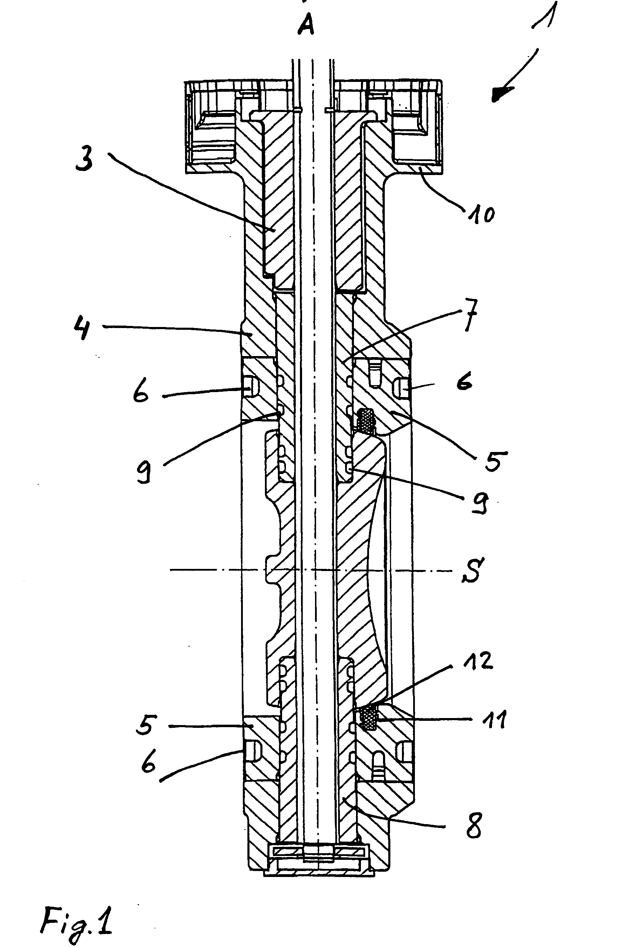

In Figur 1 ist eine Absperrklappe 1 geschnitten entlang der Strömungsrichtung durch die Absperrklappe dargestellt. Die Strömungsrichtung ist mit S angedeutet und verläuft senkrecht zum eigentlichen Absperrglied, hier eine kreisförmige Klappe 2. Die Klappe 2 ist drehbar gelagert um eine Achse A, die senkrecht zur Strömungsrichtung S verlaufend angeordnet ist. Zur Drehung der Klappe 2 ist eine Spindel 3 vorgesehen, die in einem Ventilgehäuse 4 gelagert ist, Das Ventilgehäuse 4 wird zwischen zwei Flanschen an den Enden einer mediumsführenden Rohrleitung dichtend eingespannt. Das Ventilgehäuse 4 weist hierzu einen inneren Ring 5 auf, der auf beiden Seiten mit Dichtungsnuten 6 zur Abdichtung gegenüber der Rohrleitung, die hier nicht dargestellt ist, aber in der Strömungsrichtung S verläuft, ausgebildet ist. In die Dichtungsnuten 6 werden flexible Dichtmittel zur Abdichtung gegenüber den Flanschen eingelegt. Die Spindel 3 wird oberhalb und unterhalb der Klappe 2 geführt in Führungsbuchsen 7,8, die auch mit weiteren Dichtungsnuten 9 zur Aufnahme von weiteren Dichtungsmitteln versehen sind. Das Ventilgehäuse 4 weist einen Flansch 10 auf, an dem eine Betätigungseinrichtung mit einer Flanschverbindung befestigt werden kann. Die Spindel 3 wird oben und unten im Ventilgehäuse 4 gelagert.

Im inneren Ring 5 des Ventilgehäuses 4 ist eine Nut 11 mit einem Dichtungsring 12 ersichtlich. Die Nut 11 und der Dichtungsring 12 sind im Wesentlichen ringförmig ausgebildet und sind senkrecht zur Strömungsrichtung S angeordnet.

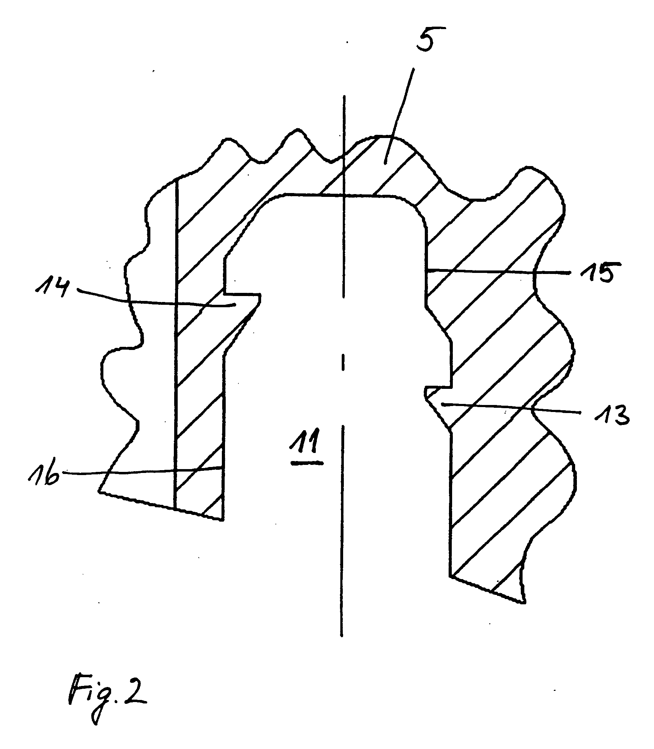

In den Figuren 2, 3 und 4 ist einen Ausschnitt aus der Absperrklappe 1 von Figur 1 vergrössert dargestellt. In Figur 2 ist einen Ausschnitt aus dem inneren ringförmigen Bereich 5 aus dem Ventilgehäuse 4 dargestellt, in dem der Dichtungsring 12 eingebracht wird. Die Nut 11 weist zwei Zacken 13,14 auf, die auf gegenüber liegenden Seiten der Nut 11 unterschiedlich ausgebildet sind. Die Zacken 13,14 sind in der Nut 11 gegenüber einander versetzt, d.h. in einer unterschiedlichen Tiefe der Nut 11 angeordnet. Der erste Zacken 13, der zuvorderst in der Nut 11 an einer ersten Seitenwand 15 ausgebildet ist, wird hergestellt durch ein Abtragen der Seitenwand 15 der Nut 11, so dass die Nut 11 vor und hinter dem ersten Zacken 13 bereichsweise eine grössere Breite als in dem tieferen Bereich und am Boden der Nut 11 aufweist. Die zweite Seitenwand 16, an die der zweite Zacken 14 ausgebildet ist, wird im Spritzgiessverfahren hergestellt und wird lediglich hinter dem Zacken 14 bearbeitet.

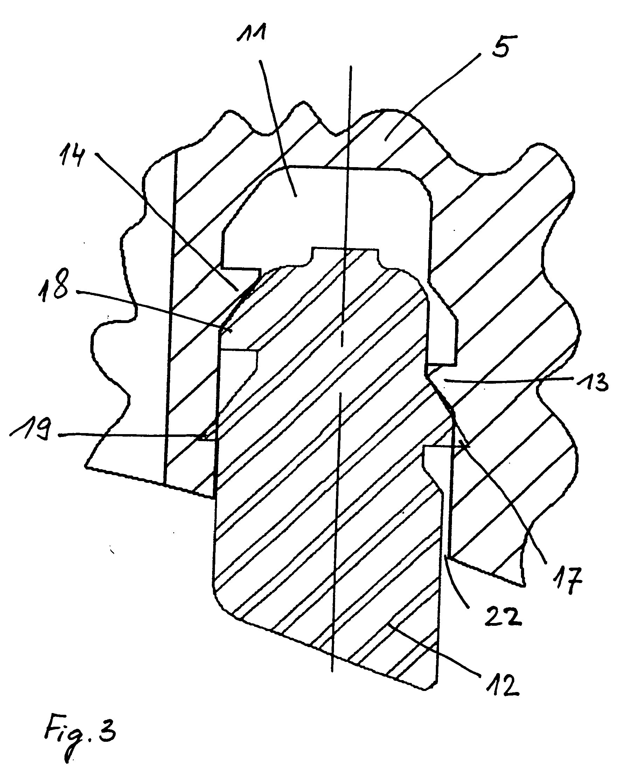

In Figur 3 ist der Dichtungsring 12 nach der Vormontage in der Nut 11 dargestellt.

Der Dichtungsring 12 weist, passend zu der Ausbildung der Nut 11, ebenfalls versetzt angeordnet Zacken 17,18 auf. Der Dichtungsring 12 wird aus einem flexiblen Material im Spritzgiessverfahren hergestellt. Der Dichtungsring 12 weist im Bereich vor und nach dem ersten Zacken 17, der zum ersten Zacken 13 der Nut 11 passt, eine unterschiedliche Dicke, entsprechend der Breite der Nut 11 auf. Es ist auch denkbar, dass der Dichtungsring 12 und die Nut 11 mit mehr als zwei Zacken 13,14,17,18 ausgebildet ist. Für die leichtere Montage ist dabei wichtig, dass die Zacken 13,14,17,18 jeweils zu einander versetzt angeordnet sind.

Im Bereich vor dem zweiten Zacken 18 weist der Dichtungsring 12 einen zusätzlichen Sporn 19 auf. Der Sporn 19 ist dem ersten Zacken 17 gegenüberliegend ausgebildet. Im Bereich des ersten Zackens 17 und dem Sporn 19 gemessen, weist der Dichtungsring 12 die grösste Breite auf. Hiermit wird erreicht, dass bei der Vormontage in der Nut 11 durch Reibung zwischen dem Dichtungsring 12 und der Nut 11 der Dichtungsring 12 festgehalten wird.

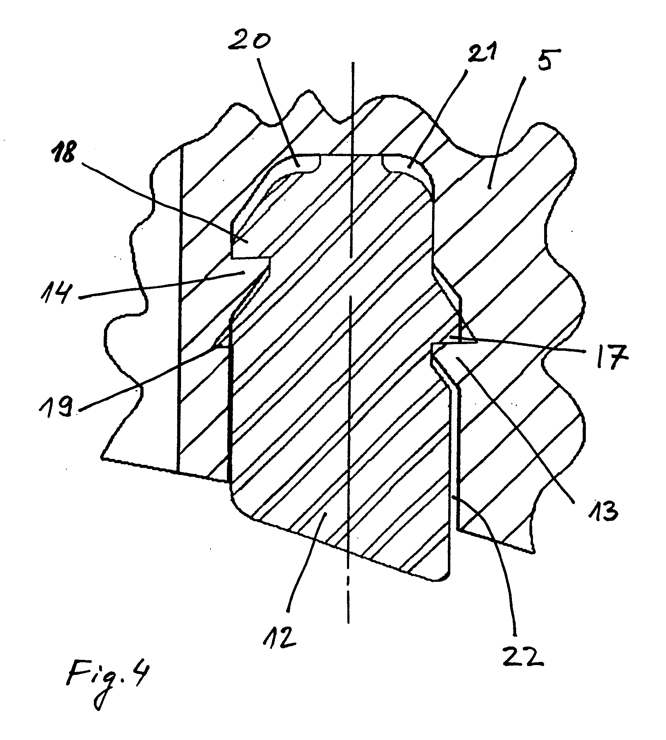

In Figur 4 sind der Dichtungsring 12 und die Nut 11 nach der Endmontage nochmals geschnitten dargestellt. In Figur 4 ist ersichtlich, wie der Dichtungsring 12 im Bereich vor dem ersten Zacken 17 eine geringere Breite aufweist als die Breite der Nut 11 in diesem Bereich. Zwischen der Wand der Nut 11 und dem Dichtungsring 12 bleibt einen Spalt 22 frei. Hiermit wird erreicht, dass der Dichtungsring 12, bei einer Belastung, die durch den Mediumsdruck auf dieser Seite wirken kann, zwar etwas nachgibt, aber nicht beschädigt wird und nicht aus der Nut 11 gedrückt werden kann. Wenn die Belastung auf der gegenüber liegenden Seite der Dichtung wirkt, verhindert der Sporn 19 dass der Dichtungsring 12 aus der Nut 11 gedrückt wird.

Die besondere Geometrie des Dichtungsringes 12 bewirkt, dass auch ohne Verwendung von Klebstoff ein guter Halt in dem Ventilgehäuse 5 erreicht wird. Im Bereich am Boden der Nut 11 sind Leerräume 20,21 ersichtlich. Die Leerräume 20,21 dienen als Bewegungsspielraum für den Dichtungsring 12 bei der Montage in das Ventilgehäuse 5. Der Dichtungsring 12 wird bei der Montage in den Leerräume 20,21 hineinfedern. Hiermit wird erreicht, dass der Dichtungsring 12 mit den Zacken 17,18 leichter und ohne Beschädigung über die Zacken 13,14 hineinrutscht. Der Dichtungsring 12 mit den versetzt angeordneten Zacken 13,14 kann auch in eine Spritzgiessform für den Innenring 5 des Ventilgehäuses 4 eingelegt werden und anschliessend mit dem Kunststoffmaterial umspritzt werden. Hierbei entfällt die Notwendigkeit hinter dem Dichtungsring 12 in der Nut 11 Leerräume frei zu lassen. Die Herstellkosten der Absperrklappe 1 werden durch das Umspritzen nochmals gesenkt, weil der Arbeitsaufwand für Vor- und Endmontage wegfällt.

## Patentansprüche

1. Dichtungseinrichtung aufweisend einen Dichtungsring (12) sowie ein Ventilgehäuse (4,5) mit einer im Wesentlichen ringförmigen Nut (11), wobei: das Ventilgehäuse (4,5) zumindest im Nutbereich einstückig und ungeteilt ausgebildet ist, wobei der Dichtungsring (12) ein Profil mit Zacken (17,18) und die Nut (11) ein weiteres Profil mit weiteren Zacken (13,14) aufweist, und wobei die Zacken (13,14) der Nut (11) bzw. die Zacken (17,18) des Dichtungsringes (12) - in radialer Richtung betrachtet - jeweils versetzt angeordnet ausgebildet sind, **dadurch gekennzeichnet, dass** der Dichtungsring (12) im Bereich radial innerhalb seines ersten Zackens (17) eine geringere Breite aufweist als die Breite der Nut (11) in diesem Bereich, derart, dass zwischen der Wand der Nut (11) und dem Dichtungsring (12) ein Spalt (22) frei bleibt.

2. Dichtungseinrichtung nach dem Anspruch 1, **dadurch gekennzeichnet, dass** eine senkrecht zur Strömungsrichtung (S) durch das Ventilgehäuse (4,5) verlaufend angeordnete Drehachse (A) und eine im wesentlichen kreisförmige um die Drehachse (A) drehbar angeordnete Klappe (2) vorgesehen ist.

3. Dichtungseinrichtung nach mindestens einem der Ansprüche 1 oder 2, **dadurch gekennzeichnet, dass** die Nut (11) in einem Innenring (5) des Ventilgehäuses (4) senkrecht zur Strömungsrichtung (S) angeordnet ist.

4. Dichtungseinrichtung nach mindestens einem der Ansprüche 1 bis 3, **dadurch gekennzeichnet, dass** die Nut (11) unmittelbar vor und hinter dem radial innen liegenden ersten Zacken (13) eine grössere Breite als im radial aussen liegenden Bereich der Nut (11) aufweist.

5. Dichtungseinrichtung nach mindestens einem der Ansprüche 1 bis 4, **dadurch gekennzeichnet, dass** der Dichtungsring (12) im Bereich radial innerhalb und ausserhalb des ersten Zackens (17), der zum ersten Zacken (13) der Nut (11) passt, eine unterschiedliche Dicke, entsprechend der Breite der Nut (11) aufweist.

6. Dichtungseinrichtung nach mindestens einem der Ansprüche 1 bis 5, **dadurch gekennzeichnet, dass** der Dichtungsring (12) im Bereich radial innerhalb des zweiten Zackens (18) einen zusätzlichen Sporn (19) aufweist.

7. Dichtungseinrichtung nach Anspruch 6, **dadurch gekennzeichnet, dass** der Sporn (19) am Dichtungsring (12) gegenüber dem ersten Zacken (17) liegend ausgebildet ist, derart, dass der Dichtungsring (12) im Bereich des Spornes (19) die grösste Dicke aufweist.

8. Dichtungseinrichtung nach mindestens einem der Ansprüche 1 bis 7, **dadurch gekennzeichnet, dass** im Bereich am Boden der Nut (11) Leerräume (20,21) zwischen der Nut (11) und dem Dichtungsring (12) vorgesehen sind.

## Claims

1. Sealing device having a sealing ring (12) and a valve housing (4, 5) with a substantially annular groove (11), the valve housing (4, 5) being of integral and undivided configuration at least in the groove region, the sealing ring (12) having a profile with teeth (17, 18) and the groove (11) having a further profile with further teeth (13, 14), and the teeth (13, 14) of the groove (11) and the teeth (17, 18) of the sealing ring (12) being configured such that they are arranged in each case offset, as viewed in the radial direction, **characterized in that** the sealing ring (12) has a smaller width in the region radially inside its first tooth (17) than the width of the groove (11) in this region, in such a way that a gap (22) remains free between the wall of the groove (11) and the sealing ring (12).

2. Sealing device according to Claim 1, **characterized in that** a rotational axis (A), which is arranged so as to extend perpendicularly with respect to the flow direction (S) through the valve housing (4, 5), and a substantially circular flap (2), which is arranged such that it can be rotated about the rotational axis (A), are provided.

3. Sealing device according to at least one of Claims 1 and 2, **characterized in that** the groove (11) is arranged in an inner ring (5) of the valve housing (4), perpendicularly with respect to the flow direction (S).

4. Sealing device according to at least one of Claims 1 to 3, **characterized in that** the groove (11) has a greater width directly in front of and behind the radially inner first tooth (13) than in the radially outer region of the groove (11).

5. Sealing device according to at least one of Claims 1 to 4, **characterized in that** the sealing ring (12) has a different thickness, corresponding to the width of the groove (11), in the region radially inside and outside the first tooth (17) which matches the first tooth (13) of the groove (11).

6. Sealing device according to at least one of Claims 1 to 5, **characterized in that** the sealing ring (12) has an additional spur (19) in the region radially inside the second tooth (18).

7. Sealing device according to Claim 6, **characterized in that** the spur (19) is formed on the sealing ring (12) so as to lie opposite the first tooth (17) in such a way that the sealing ring (12) has the greatest thickness in the region of the spur (19).

8. Sealing device according to at least one of Claims 1 to 7, **characterized in that** empty spaces (20, 21) are provided between the groove (11) and the sealing ring (12) in the region at the bottom of the groove (11).

## Revendications

1. Dispositif d'étanchéité présentant une bague d'étanchéité (12) ainsi qu'un boîtier de soupape (4, 5) avec une rainure essentiellement annulaire (11), dans lequel : le boîtier de soupape (4, 5) est réalisé au moins dans la région de la rainure d'une seule pièce et sans division, la bague d'étanchéité (12) présentant une section avec des dents (17, 18) et la rainure (11) présentant une autre section avec d'autres dents (13, 14), et dans lequel les dents (13, 14) de la rainure (11) ou les dents (17, 18) de la bague d'étanchéité (12) - considérées dans la direction radiale - sont disposées à chaque fois de manière décalée, **caractérisé en ce que** la bague d'étanchéité (12) présente, dans la région radialement à l'intérieur de sa première dent (17), une plus petite largeur que la largeur de la rainure (11) dans cette région, de telle sorte qu'il subsiste entre la paroi de la rainure (11) et la bague d'étanchéité (12) une fente (22).

2. Dispositif d'étanchéité selon la revendication 1, **caractérisé en ce que** l'on prévoit un axe de rotation (A) s'étendant perpendiculairement à la direction d'écoulement (S) à travers le boîtier de soupape (4, 5) et un volet (2) disposé de façon à être rotatif autour de l'axe de rotation (A) et de forme essentiellement circulaire.

3. Dispositif d'étanchéité selon au moins l'une quelconque des revendications 1 ou 2, **caractérisé en ce que** la rainure (11) est disposée dans une bague intérieure (5) du boîtier de soupape (4) perpendiculairement à la direction d'écoulement (S).

4. Dispositif d'étanchéité selon au moins l'une quelconque des revendications 1 à 3, **caractérisé en ce que** la rainure (11) présente directement avant et après la première dent (13) située radialement à l'intérieur, une plus grande largeur que dans la région de la rainure (11) située radialement à l'extérieur.

5. Dispositif d'étanchéité selon au moins l'une quelconque des revendications 1 à 4, **caractérisé en ce que** la bague d'étanchéité (12) présente, dans la région radialement à l'intérieur et à l'extérieur de la première dent (17), qui s'adapte à la première dent (13) de la rainure (11), une épaisseur différente, correspondant à la largeur de la rainure (11).

6. Dispositif d'étanchéité selon au moins l'une quelconque des revendications 1 à 5, **caractérisé en ce que** la bague d'étanchéité (12) présente, dans la région radialement à l'intérieur de la deuxième dent (18), un ergot supplémentaire (19).

7. Dispositif d'étanchéité selon la revendication 6, **caractérisé en ce que** l'ergot (19) est réalisé de manière à être situé sur la bague d'étanchéité (12) à plat par rapport à la première dent (17), de telle sorte que la bague d'étanchéité (12) présente la plus grande épaisseur dans la région de l'ergot (19).

8. Dispositif d'étanchéité selon au moins l'une quelconque des revendications 1 à 7, **caractérisé en ce que** dans la région au fond de la rainure (11), des espaces vides (20, 21) sont prévus entre la rainure (11) et la bague d'étanchéité (12).
